# EUROPEAN PATENT SPECIFICATION

(11) **EP 0 597 575 B1**
(45) Date of publication and mention of the grant of the patent: **22.12.1999**
(21) Application number: 93306880.1
(22) Date of filing: 31.08.1993
(51) Int. Cl.: G06F 9/46

(54) **Clipboard facility for computer network**
Zwischenablagenanordnung für ein Rechnernetzwerk
Dispositif de presse-papier pour un réseau d'ordinateurs

(30) Priority: 10.11.1992 GB 9223565
(43) Date of publication of application: 18.05.1994
(73) Proprietor: International Business Machines Corporation, Armonk, N.Y. 10504 (US)
(72) Inventor: Maltby, John, Emsworth, Hampshire PO16 7PA (GB); Phipps, Simon, Southampton, Hampshire SO2 1PQ (GB)
(74) Representative: Burt, Roger James, Dr.

(56) References cited:
- EP-A- 0 380 211
- IBM TECHNICAL DISCLOSURE BULLETIN. vol. 32, no. 9B , February 1990 , NEW YORK US pages 76 - 77 XP82239 'Tow-way initiation of inter-application conversation'
- MICROSOFT SYSTEMS JOURNAL November 1987 , MICROSOFT PRESS, WASHINGTON, US pages 13 - 38 KEVIN P. WELCH 'Interprogram communications using Window's Dynamic Data Exchange'

## Description

The present invention relates to a method and apparatus for providing a clipboard facility over a computer network, whereby material can be transferred between a first application on a first computer to a second application on a second computer.

The following two prior art documents are related to inter-application and inter-program communicaiton respectively.

IBM TDB, vol. 32, no. 9B, February 1990, New York, US, pages 76-77; "Two-way initiation of inter-application conversation". In this system a client application must be ready to respond to a message from a server in order to initiate dynamic data excange conversations in the OS/2 Presentation Manager environment.

Microsoft Systems Journal, November 1987, MICROSOFT PRESS, WASHINGTON US, pages 13-38, KEVIN P. WELCH: "Interprogram communications using Windows' Dynamic Data Exchange". A type of DDE conversation between clients and servers is described. A client can advise the server that it wants periodic updates on a particular data item. Using an atom that represents the data item, the client defines a special global memory data structure that specifies how the data is to be transmitted and in which format it is to be sent, see page 18, right column, llines 10-21. Page 19, second column, first paragraph further details how a server can render a specified item in a requested format.

A personal computer running a multi-tasking operating system such as OS/2 or Windows can support more than one application running simultaneously. To allow users to transfer data from one application to another such operating systems offer a clipboard facility. Applications copy data onto the "clipboard" (effectively a piece of memory which they then surrender to the operating system). Another application can then interrogate the operating system to find out what is available on the clipboard, and if desired take a copy of the data from the clipboard. An important feature of clipboards is that since they are used for inter-application communication, there can be problems with one application not accepting the data format of another. Thus normally an application will write the data into the clipboard in several different formats, and the receiving application will then specify which of these data formats it would like to receive the data in. The clipboard can be used for exchanging text, images, and so on. Some applications also use the clipboard internally - ie they write to the clipboard for subsequent retrieval by themselves - although this is not to be recommended, since it will overwrite any data present the user has put in the clipboard.

The clipboard is much easier and quicker to use than copying the data to a file, although it is intended only for transient use, so that any data in the clipboard is lost at power off. Likewise applications cannot simply exchange data, since in a protected mode operating system they each have a particular piece of memory that only they can access (there are other methods of obtaining shared memory, but these are not open to user control). Furthermore, the clipboard defines several standard formats, which are available for all applications to use.

A typical situation in which a user might employ the clipboard function would be to copy a portion of text from one document to another. The user (generally with a mouse and cursor) would first identify the text to be copied, and then select the appropriate menu option to place this text in the clipboard. The application would then pass the text to the operating system in a variety of formats - for example, as a text file, as a bit map, as a metafile, as a miniature document complete with format information, and so on (the operating system specifies a list of common predetermined formats, but it is also possible for the application to use its own particular format). In the case of some formats the application may decide to actually write the text/data into the memory dedicated to the clipboard, whilst for the remaining formats only a reference back to the application is stored.

The user in another application can then request that the text/data is retrieved from the clipboard. Such a request results in the application being asked to select one of the available formats. The application may decide automatically which format to take (perhaps it can only accept a particular format), or it may pass this choice on to the user. If the format chosen is one which is actually stored in the clipboard, then the operating system passes the text/data directly to the application. However, if the selected format is one for which only a reference is stored, then the operating system first has to request the text/data from the original donating application, which can then be forwarded to the receiving application. This latter process, which is known as delayed rendering, is transparent to the user (ie the user cannot generally tell whether the requested format is actually stored in the operating system, or has to be requested from the application).

An application can request (via an operating system call) to be the owner of the clipboard. This results in it receiving notification whenever text/data is requested from the clipboard or another application tries to write something to the clipboard. Any application that wants to use delayed rendering must become the clipboard owner, so that the operating system knows from which application to request data to be rendered. When such an application is being closed down, the operating system requests that any unrendered formats are actually put onto the clipboard, so that these remain accessible - an alternative would be for the application to delete any unrendered formats from the clipboard - otherwise a request for one of those formats will result in an error. The formats that have been actually copied into the clipboard memory remain available until deleted or overwritten by clipboard operations by another application.

Further details about clipboards in OS/2 Version 2.0 can be found in the OS/2 V2.0 Technical Reference Library, in particular the Presentation Manager Programming Reference Manual Volume II (document number S10G 6265 00) and the Programming Guide Volume II, (document number S10G 6494 00, see Chapter 31 especially) from International Business Machines Corporation.

It is very desirable to be able to offer a clipboard facility not just within a single computer but within a network - ie to allow an application running on one machine to exchange data with an application running on another machine. One known approach is based on providing a centralised network clipboard, separate from each machine's own clipboard. Material is copied into the centralised clipboard in a manner analogous to the standard clipboard. The centralised clipboard would then make this material available to be viewed and copied (if desired) by the other machines, via their own clipboard function.

This approach has two potential problems. Firstly, it is difficult to use with existing applications, since these have no facility for putting material into the centralised clipboard. Secondly, the transfer process may be asynchronous, compared to the synchronous operation of the clipboard on a single machine. Thus it may be necessary for the user to physically explore the contents of the centralised clipboard (somwhat like receiving email), rather than this material automatically appearing on his or her clipboard.

Accordingly, the invention provides a method of providing a clipboard facility over a computer network, in which material submitted by a first application to a clipboard at a first computer can be copied to a second application at a second computer in the network, comprising the steps of:
receiving notification that the first application has submitted material to the clipboard on the first computer and obtaining a list of available formats for said submitted material;
transmitting the list of available formats to the second computer;
submitting the list of available formats to a clipboard on the second computer;
responsive to receiving a request from the second application for a copy of the clipboard material in a particular format, transmitting a corresponding request back to the first computer;
responsive to receiving a request from the second computer for a copy of the clipboard material in a particular format, obtaining the requested material from the clipboard on the first computer;
transmitting the requested material obtained from the clipboard on the first computer to the second computer;
submitting the requested material to the clipboard on the second computer, for passing to the second application.

The method of the invention avoids the need to transmit data across the network in multiple formats. Thus the applicant originally attempted to develop a clipboard facility for a computer network based on trying to ensure that the clipboards on each of the communicating computers were maintained in an identical state. The problem with such an approach however, is that it can lead to excessive amounts of traffic between the two computers, and the resulting bandwidth requirements result in a very slow (as well as expensive) facility. This is because applications write far more material to the clipboard that is normally actually used. For example, copying a piece of text to the clipboard may result in four different formats being stored into the clipboard: the text itself (say 1 kbyte), a bitmap of the text (perhaps 50 kbytes), a graphics metafile of the text (perhaps 12 kbytes), and a so-called "rich text" version of the text, complete with font information and so on (perhaps 10 kbytes). In order to duplicate the clipboard at a remote terminal, all these formats need to be transmitted over the link to the remote terminal.

By contrast, according to the present invention, only a list of formats, which is typically extremely small, is transferred initially. No actual data is transferred until specifically requested. Thus if the receiving terminal only wants to use the plain text format, just this version will be transmitted, resulting in a very significant reduction in communications requirements. This saving will be even greater in cases where the remote application user decides not to use the data in the clipboard. The reduction in volume of data to be transmitted is particularly important if low bandwidth links such as ISDN telephone lines or asynchronous links are being used.

Moreover, because updates to the first computer appear automatically and effectively instantaneously at the second computer, the clipboard facility according to the present invention is synchronous, in contrast to the asynchronous facility provided by the centralised clipboard feature.

The present invention also provides a computer adapted to provide a clipboard facility over a computer network, in which material submitted by a first application to a clipboard on the computer is copied to a second application at another computer in the network, comprising:
means for receiving notification that the first application has submitted material to the clipboard on the computer and obtaining a list of available formats for said submitted material;
means for transmitting the list of available formats to said another computer;
means responsive to a request from said another computer for a copy of the clipboard material in a particular format, for obtaining the requested material from the clipboard on the computer; and
means for transmitting the requested material obtained from the clipboard on the computer to said another computer.

Such a computer monitors its own clipboard, sends details of the updates to a remote computer, and supplies material in a particular format from its own clipboard on request. Thus this computer acts as the donating terminal in the network clipboard facility.

The present invention further provides a computer adapted to provide a clipboard facility over a computer network, in which material submitted by a remote application to a clipboard on another computer in the network is copied to an application at the computer, comprising:
means for receiving from said another computer a list of formats in which the material submitted to the clipboard on said another computer by the remote application is available;
means for submitting the list of available formats to a clipboard on the computer;
means responsive to a request from the application for a copy of the submitted material in a particular format for transmitting a corresponding request to said another computer;
means for receiving the requested material from said another computer;
and means for submitting the requested material to the clipboard on the computer for passing to the application.

Such a computer receives clipboard updates in the form of lists of formats from a remote computer, and inserts these lists onto the clipboard using delayed rendering. When a particular format is selected from the clipboard, the request from the clipboard for the relevant material is returned to the remote computer. On receipt of the material from the remote computer, this material can be passed to the clipboard for forwarding to the requesting application. Thus this computer is equipped to act as the receiving terminal in the network clipboard facility.

It is preferred that in a computer equipped to act as a donating terminal the receiving means is detachable so as to no longer receive notification that the first application has submitted material to the clipboard. It is likewise preferred that in a computer equipped to act as a receiving terminal the submitting means is detachable so as to no longer submit the list of available formats to a clipboard on the application. One reason for providing the attach/detach feature is that the user at the receiving terminal is effectively allowing the sending or donating terminal to control his or her clipboard. If the user at the receiving terminal therefore wants to take control of his or her own clipboard, for example to transfer material between two applications on that particular machine, then it is desirable to temporarily detach the submitting means.

Whilst it is quite possible for a computer to contain the necessary features to act as both a donating and receiving terminal, in such a case the computer preferably also includes means for ensuring that no more than one the receiving means or submitting means is attached at any particular time. This has the effect of preventing a terminal from simultaneously acting in both a receiving and donating capacity. This restriction acts as a safeguard against an infinite loop sort of situation, where one terminal updates the clipboard in a second, which updates the clipboard in the first, which updates the clipboard in the second, and so on.

An embodiment of the invention will now be described by way of example with reference to the following drawings:
Figure 1 depicts in schematic form the main components of a clipboard facility across two terminals;
Figure 2 is a flow chart representing the steps taken in operating the clipboard facility across two terminals;
Figure 3 illustrates the calls involved in the operations shown in Figure 2 for the OS/2 operating system;
Figure 4 depicts in schematic form the components of a clipboard facility across four terminals.

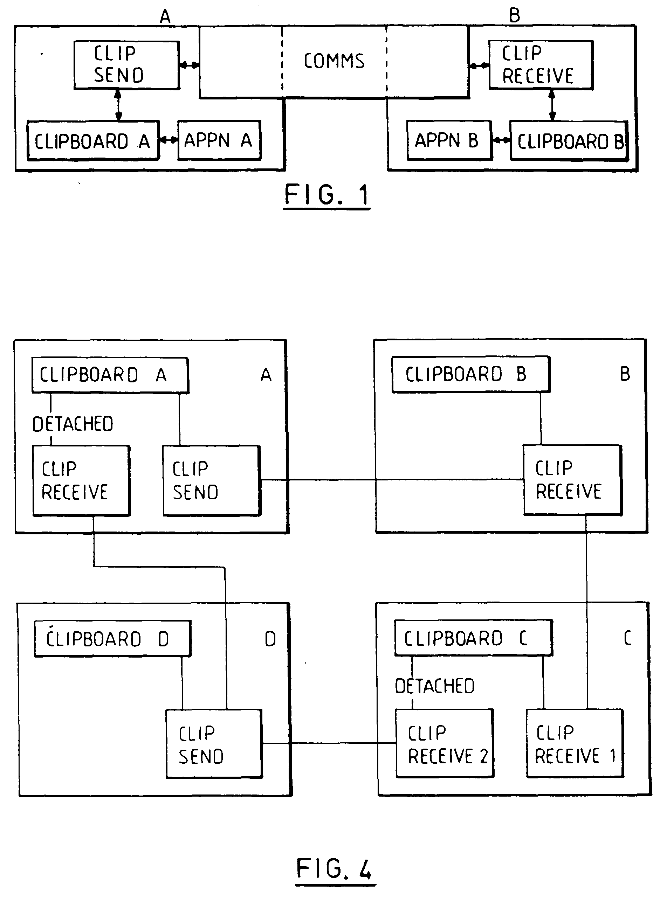

With reference to Figure 1, two terminals A, B have clipboards ("CLIPBOARD A" and "CLIPBOARD B" respectively) supported by the operating system at the terminal. The two terminals are connected by a network link with appropriate communications software ("COMMS") at each terminal. It is desired to pass data from an application program ("APPN A") running on terminal A to an application program ("APPN B") running on terminal B. In order to achieve this, a routine ("CLIP SEND") is started at A. This routine then uses the COMMS system to "call" terminal B to activate another routine ("CLIP RECEIVE") at terminal B (a user can initiate a CLIP SEND routine at his or her terminal, but not a CLIP RECEIVE, which can only be initiated by a remote CLIP SEND). CLIP SEND then makes an operating system call to become a viewer of CLIPBOARD A.

The two terminals can now provide the network clipboard facility. In order to transfer data from APPN A to APPN B, the user at terminal A selects the appropriate material from APPN A and copies this into CLIPBOARD A in the conventional manner (it makes no difference whether or not this process uses delayed rendering). Because the CLIP SEND routine is a viewer of CLIPBOARD A, it is notified of any updates to CLIPBOARD A. When it is alerted to a change to CLIPBOARD A, it requests the list of available formats which it sends to CLIP RECEIVE. CLIP RECEIVE now takes ownership of CLIPBOARD B and inserts the list of formats using delayed rendering (ie it passes a null pointer to the operating system, which therefore knows that in order to obtain a copy of the referenced data it must go back to the owning program, CLIP RECEIVE). At this stage CLIPBOARD B contains only null pointers, whereas CLIPBOARD A will generally contain data as well, unless APPN A uses only delayed rendering, so that the two clipboards will not be in an identical condition. It should also be noted that updates to CLIPBOARD A appear automatically and as soon as possible at CLIPBOARD B, so that the clipboard facility is effectively synchronous.

The user can now examine CLIPBOARD B via APPN B and select an appropriate format in which to retrieve data (or APPN B can make the selection automatically), causing CLIPBOARD B to request the data from CLIP RECEIVE in the standard manner for delayed rendering. CLIP RECEIVE transmits this request over the network back to CLIP SEND, which then requests the data in the relevant format from CLIPBOARD A. CLIPBOARD A then passes the data to CLIP SEND (having first obtained it from APPN A if APPN A uses delayed rendering), for transmission to CLIP RECEIVE. CLIP RECEIVE can now pass the data to CLIPBOARD B in accordance with the standard procedure for delayed rendering, for supply to APPN B.

Bandwidth requirements for the shared clipboard are kept to a minimum by only transferring data if specifically requested to do so, and then only in the requested form. Note that if a clipboard viewer is running at B, this will have the effect of automatically requesting any updates made to CLIPBOARD A, to the detriment of communications performance. It is therefore generally sensible for the user not to run such a viewer at an active receiving terminal.

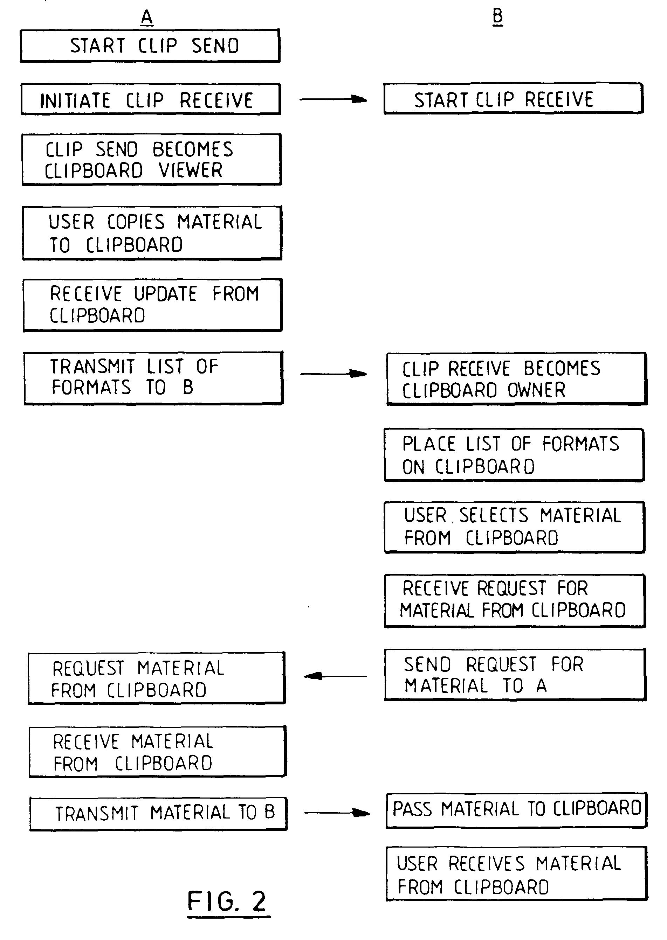

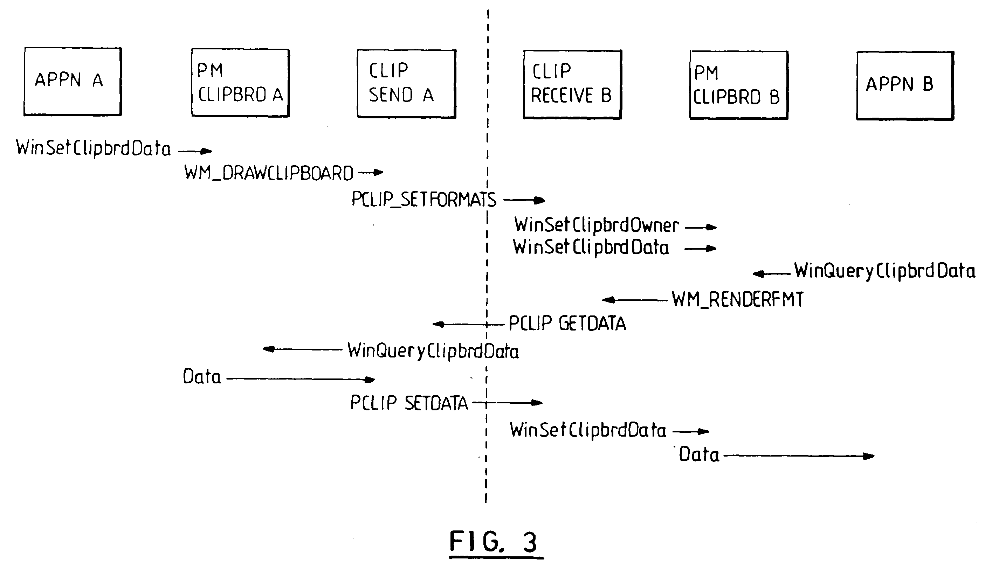

The procedure for providing a shared clipboard facility between two terminals is illustrated in flow chart form in Figure 2, as well as in Figure 3, which gives the specific OS/2 operating system calls used (although the invention is not restricted to an OS/2 environment, and indeed may be used in heterogeneous networks with a multiplicity of operating systems, providing care is taken, eg over the naming of the data formats used). Thus APPN A inserts data onto the clipboard using WinSetClipbrdData, which causes a notification WM_DRAWCLIPBOARD to be sent to CLIP SEND. CLIP SEND then needs to interrogate CLIPBOARD A to obtain the list of formats in which the data on the clipboard is available. These will typically be a subset of the operating system defined formats, which are recognised on both machines, along with a private format, which is identified by a string descriptor originally specified by APPN A. It passes this list to the remote terminal B using the PCLIP_SETFORMATS routine (routine names starting "PCLIP" are not part of OS/2, but were developed in order to implement the network clipboard facility).

CLIP RECEIVE then uses the call WinSetClipbrdOwner to become the owner of CLIPBOARD B (it may in fact already be the owner of the CLIPBOARD B, unless this is the first list of formats to be transferred, or else another application at B has taken ownership of CLIPBOARD B since the previous list of formats from A). The formats are then inserted onto CLIPBOARD B using the delayed rendering option in WinSetClipbrdData, and become available for user selection.

When a user selects a format from APPN B using the WinQueryClipbrdData call, CLIPBOARD B passes a WM_RENDERFMT call to CLIP RECEIVE requesting that the specified format be rendered. This causes CLIP RECEIVE to transmit a PCLIP_GETDATA message back to terminal A. On receipt of this message, CLIP SEND obtains the relevant data from CLIPBOARD A using the WinQueryClipbrdData call, which it can then return to B using PCLIP_SETDATA. CLIP RECEIVE can then use the call WinSetClipbrdData to insert the data onto CLIPBOARD B, from which it can be supplied to APPN B. Note that once the data has been obtained from terminal A and rendered to CLIPBOARD B, the data is retained by CLIPBOARD B in accordance with the normal operation of a clipboard. This means that if the same data format is requested again, it is immediately available, with no need to re-transfer it over the network (unless of course another application has overwritten CLIPBOARD B in the mean-time).

One complication is that for some data formats such as bit map, the WinQueryClipbrdData call returns a handle rather than a pointer to the location of the data. This handle is sufficient for displaying the bit map at that particular computer, but is not useful in the context of transmission to a remote terminal. However, using the handle, it is possible to call operating system routines to locate the area of storage holding the bit map, and so construct the necessary data for transmission. Likewise, on receipt at the remote terminal, the data can be "deconstructed" into correct bit map format.

It should be noted that the whole communications process is transparent to both systems. Thus at terminal A, as far as APPN A and CLIPBOARD A are concerned, they are simply transferring material to another application CLIP SEND, and are unaware that CLIP SEND is not the ultimate destination of the material. Likewise, at terminal B, as far as APPN B and CLIPBOARD B are concerned, they are again simply transferring material from one application, CLIP RECEIVE, to another, APPN B, and are unaware that CLIP RECEIVE is not the true source of the data. This has the important advantage that APPN A and APPN B can be any standard application that supports clipboard operation on a single computer, and do not need to be modified to provide the clipboard facility over the network. (The only exception to this is if APPN A and APPN B use a private format for the clipboard which includes machine specific information, such as disk drives and directories, in which case an error will result if this private format is invoked - a similar situation can occur even on a single machine, if an application uses a particular private format, which is subsequently misinterpreted by another application).

One important aspect of the network clipboard facility is that it is possible for the user to detach CLIP SEND or CLIP RECEIVE from their respective clipboards, as well as to attach them back. When CLIP SEND is detached, it no longer receives updates from CLIPBOARD A for transmission to CLIPBOARD B, and is unable to satisfy requests from terminal B for data from CLIPBOARD A. Similarly, when CLIPBOARD B is detached, it no longer posts updates from CLIPBOARD A onto CLIPBOARD B, and cannot respond to requests from CLIPBOARD B for data.

Thus if either (or both) of CLIP SEND or CLIP RECEIVE is detached, it is no longer possible to obtain data from terminal A (likewise if the communications link goes down). In this case the list of formats is still present in CLIPBOARD B, but APPN B can only access those formats that have previously been rendered, and so are now actually stored in CLIPBOARD B. A request for any other non-rendered format will result in an error, analogous to the result on a single machine if an application responsible for delayed rendering has been closed. Both CLIP SEND and CLIP RECEIVE are started in detached form, and must be explicitly attached by their respective users (this operation is not shown in Figure 2 or 3) before they can become a clipboard viewer or owner as appropriate. Whenever CLIP RECEIVE is attached, it sends a PCLIP GETFORMATS message to CLIP SEND to obtain a copy of the most recent set of formats in CLIPBOARD A, which it can then submit to CLIPBOARD B (thus if CLIPBOARD B is ever accidentally over-written by another application on B, the user can retrieve the current set of formats on CLIPBOARD A by simply detaching then re-attaching CLIP RECEIVE).

The ability to attach and detach CLIP RECEIVE is useful for the user at terminal B, since CLIPBOARD B is effectively under the control of the terminal A whilst CLIP RECEIVE is attached. When CLIP RECEIVE is detached however, CLIPBOARD B can be used by the user at terminal B for his or her own purposes, without the danger of being suddenly overwritten by an update from terminal A. The ability to attach and detach is also important in more complicated configurations, as explained below.

The arrangement shown in Figure 1 only provides for data transfer from terminal A to terminal B. In order to transfer data in the reverse direction, it would be necessary to start a CLIP SEND routine at terminal B, and a CLIP RECEIVE at terminal A. However, there is a danger here of an unbounded situation, where for example A updates the clipboard of B, causing B to update the clipboard of A, causing A to update the clipboard of B, and so on ad infinitum. To avoid this danger, the system is arranged so that a terminal cannot have both CLIP RECEIVE and CLIP SEND attached at the same time (there may of course be other solutions to this problem).

The clipboard facility of the invention can be easily employed in multi-way exchanges. Such a situation is illustrated in Figure 4, which depicts four terminals A, B, C, D (all assumed to be linked by appropriate network software). A single CLIP SEND can initiate, and so be linked to, more than one CLIP RECEIVE. Thus a CLIP SEND at A is linked to CLIP RECEIVE routines at B and C, which both receive updated lists of formats. Each CLIP RECEIVE is linked however to just the one CLIP SEND to avoid the confusion of a clipboard being (over)written by many other terminals.

It is possible for any terminal to be simultaneously part of more than one clipboard sharing group by running multiple copies of CLIP SEND and/or RECEIVE. Thus as shown in Figure 4, not only do terminals A, B and C form a clipboard sharing group, but so do terminals A, D, C. However, it is only possible for a terminal to have a single instance of either CLIP SEND or CLIP RECEIVE attached at any particular time, so that out of sharing group A, D, C, only D is currently attached. This restriction reflects the OS/2 limitation that only one application can be a clipboard viewer or owner at any one time, although it has the advantage that the user does not get confused by updates from one sharing group accidentally overwriting those from another, and so on. Furthermore, as mentioned above, the prohibition on having both CLIP SEND and CLIP RECEIVE attached at any one terminal is an effective way of avoiding runaway situations, where a single update is perpetuated indefinitely around the network.

## Claims

1. A method of providing a clipboard facility over a computer network, in which material submitted by a first application to a clipboard at a first computer can be copied to a second application at a second computer in the network, comprising the steps of:
receiving notification that the first application has submitted material to the clipboard on the first computer and obtaining a list of available formats for said submitted material;
transmitting the list of available formats to the second computer;
submitting the list of available formats to a clipboard on the second computer;
responsive to receiving a request from the second application for a copy of the clipboard material in a particular format, transmitting a corresponding request back to the first computer;
responsive to receiving a request from the second computer for a copy of the clipboard material in a particular format, obtaining the requested material from the clipboard on the first computer;
transmitting the requested material obtained from the clipboard on the first computer to the second computer;
submitting the requested material to the clipboard on the second computer, for passing to the second application.

2. A computer adapted to provide a clipboard facility over a computer network, in which material submitted by a first application to a clipboard on the computer is copied to a second application at another computer in the network, comprising:
means for receiving notification that the first application has submitted material to the clipboard on the computer and obtaining a list of available formats for said submitted material;
means for transmitting the list of available formats to said another computer;
means responsive to a request from said another computer for a copy of the clipboard material in a particular format, for obtaining the requested material from the clipboard on the computer; and
means for transmitting the requested material obtained from the clipboard on the computer to said another computer.

3. A computer as claimed in claim 2, wherein the receiving means can be detached so as to no longer receive notification that the first application has submitted material to the clipboard.

4. A computer adapted to provide a clipboard facility over a computer network, in which material submitted by a remote application to a clipboard on another computer in the network is copied to an application at the computer, comprising:
means for receiving from said another computer a list of formats in which the material submitted to the clipboard on said another computer by the remote application is available;
means for submitting the list of available formats to a clipboard on the computer;
means responsive to a request from the application for a copy of the submitted material in a particular format for transmitting a corresponding request to said another computer;
means for receiving the requested material from said another computer;
and means for submitting the requested material to the clipboard on the computer for passing to the application.

5. A computer as claimed in claim 4, wherein the submitting means can be detached so as to no longer submit the list of available formats to a clipboard on the application.

6. A computer as claimed in claim 3 and claim 5, further including means for ensuring that at least one of the receiving means and the submitting means is detached at any particular time.

## Patentansprüche

1. Ein Verfahren zum Vorsehen einer Zwischenablage-Vorrichtung über ein Rechnernetzwerk, in dem von einer ersten Applikation auf eine Zwischenablage in einem ersten Rechner gelegtes Material auf eine zweite Applikation in einem zweiten Rechner im Netzwerk kopiert werden kann, das die folgenden Schritte umfaßt:
Erhalten einer Mitteilung, daß die erste Applikation Material auf die Zwischenablage im ersten Rechner abgelegt hat, und Erzeugen einer Liste verfügbarer Formate für das abgelegte Material;
Übertragen der Liste der verfügbaren Formate auf den zweiten Rechner;
Legen der Liste der verfügbaren Formate auf eine Zwischenablage im zweiten Rechner;
als Reaktion auf das Empfangen einer Anforderung von der zweiten Applikation nach einer Kopie des Zwischenablagematerials in einem bestimmten Format, Übertragen einer entsprechenden Anforderung zurück auf den ersten Rechner;
als Reaktion auf das Empfangen einer Anforderung vom zweiten Rechner auf eine Kopie des Zwischenablagematerials in einem bestimmten Format, Erhalten des angeforderter Materials von der Zwischenablage auf dem ersten Rechner;
Übertragen des angeforderter, von der Zwischenablage im ersten Rechner erhaltenen Materials auf den zweiten Rechner;
Legen des angeforderter Materials auf die Zwischenablage im zweiten Rechner, zur Weitergabe an die zweite Applikation.

2. Ein Rechner, der so ausgelegt ist, daß er eine Zwischenablage-Vorrichtung über ein Rechnernetzwerk bietet, in dem von einer ersten Applikation auf eine Zwischenablage im Rechner gelegtes Material auf eine zweite Applikation in einem anderen Rechner im Netzwerk kopiert wird, enthaltend:
Mittel zum Empfangen einer Mitteilung, daß die erste Applikation Material auf die Zwischenablage im Rechner gelegt hat, und zum Erhalten einer Liste verfügbarer Formate für das eingebrachte Material;
Mittel zum Übertragen der Liste der verfügbaren Formate auf den anderen Rechner;
Mittel, die auf eine Anforderung auf eine Kopie des Zwischenspeichermaterials in einem besonderen Format vom anderen Rechner ansprechen, um das angeforderte Material von der Zwischenablage im Rechner zu erhalten; und
Mittel zum Übertragen des angeforderter, von der Zwischenablage im Rechner erhaltenen Materials auf den anderen Rechner.

3. Ein Rechner gemäß Anspruch 2, in dem das empfangende Mittel abgeschaltet werden kann, so daß es keine Meldung mehr empfängt, daß die erste Applikation Material auf die Zwischenablage gelegt hat.

4. Ein Rechner, der so ausgelegt ist, daß er eine Zwischenablage-Vorrichtung über ein Rechnernetzwerk bereitstellt, in dem von einer entfernt liegenden Applikation auf eine Zwischenablage in einem anderen Rechner im Netzwerk gelegtes Material auf eine Applikation im Rechner kopiert wird, enthaltend:
Mittel zum Empfangen einer Liste der Formate von dem anderen Rechner, in denen das durch die entfernt liegende Applikation auf die Zwischenablage in dem anderen Rechner gelegte Material verfügbar ist;
Mittel zum Legen der Liste der verfügbaren Formate auf eine Zwischenablage auf dem Rechner;
Mittel, die auf eine Anforderung einer Kopie des abgelegten Materials in einem besonderen Format durch die Applikation ansprechen zum Übertragen einer entsprechenden Anforderung auf den anderen Rechner;
Mittel zum Empfangen des angeforderter Materials vom anderen Rechner; und
Mittel zum Legen des angeforderter Materials auf die Zwischenablage auf dem Rechner zur Weiterleitung an die Applikation.

5. Ein Rechner gemäß Anspruch 4, in dem das ablegende Mittel abgeschaltet werden kann, so daß es nicht mehr länger die Liste der verfügbaren Formate auf eine Zwischenablage in der Applikation ablegt.

6. Ein Rechner gemäß Anspruch 3 und Anspruch 5, der ferner Mittel beinhaltet, um sicherzustellen, daß mindestens eines, das Empfangsmittel oder das Ablegemittel, zu einer bestimmten Zeit abgeschaltet ist.

## Revendications

1. Un procédé pour fournir un dispositif de presse-papiers pour un réseau d'ordinateurs, dans lequel du matériau soumis par une première application à un presse-papiers au niveau d'un premier ordinateur peut être copié à une deuxième application en un deuxième ordinateur se trouvant dans le réseau, comprenant les étapes consistant à :
recevoir une notification du fait que la première application ait soumis du matériau au presse-papiers situé sur le premier ordinateur et obtenir une liste de formats disponibles pour ledit matériau soumis;
transmettre la liste des formats disponibles au deuxième ordinateur;
soumettre la liste des formats disponibles à un presse-papiers situé sur le deuxième ordinateur;
en réponse à la réception d'une requête issue de la deuxième application, visant à obtenir une copie du matériau de presse-papiers sous un format particulier, retransmettre une requête correspondante au premier ordinateur;
en réponse à la réception d'une requête issue du deuxième ordinateur pour recevoir une copie du matériau du presse-papiers sous un format particulier, obtenir le matériau objet de la requête du presse-papiers se trouvant sur le premier ordinateur;
transmettre le matériau objet de la requête ayant été obtenu du presse-papiers sur le premier ordinateur au deuxième ordinateur;
soumettre le matériau objet de la requête au presse-papiers situé sur le deuxième ordinateur pour passer à la deuxième application.

2. Un ordinateur adapté pour fournir un dispositif de presse-papiers sur un réseau d'ordinateur, dans lequel du matériau soumis par une première application à un presse-papiers sur l'ordinateur est copié à une deuxième application sur un autre ordinateur situé dans le réseau, comprenant :
des moyens pour recevoir la notification du fait que la première application a soumis du matériau au presse-papiers sur l'ordinateur et obtenir une liste de formats disponibles pour ledit matériau soumis;
des moyens pour transmettre la liste des formats disponibles audit autre ordinateur;
des moyens réagissant à une requête issue dudit autre ordinateur, visant à obtenir une copie du matériau du presse-papiers, sous un format particulier, pour obtenir le matériau issu de la requête, issu du presse-papiers situé sur l'ordinateur; et
des moyens pour transmettre le matériau issu de la requête ayant été obtenue du presse-papiers situé sur l'ordinateur audit autre ordinateur.

3. Un ordinateur selon la revendication 2, dans lequel les moyens récepteurs peuvent être déconnectés, de manière à ne plus recevoir de notification du fait que la première application a soumis du matériau au presse-papiers.

4. Un ordinateur adapté pour fournir un dispositif de presse-papiers sur un réseau d'ordinateurs, dans lequel du matériau soumis par une application distante à un presse-papiers situé sur un autre ordinateur dans le réseau est copié sur une application au niveau de l'ordinateur, comprenant :
des moyens pour recevoir dudit autre ordinateur une liste des formats sous lesquels le matériau soumis au presse-papiers sur ledit autre ordinateur par l'application distante est disponible;
des moyens pour soumettre la liste des formats disponibles à un presse-papiers sur l'ordinateur;
des moyens, réagissant à une requête issue de l'application, visant à obtenir une copie du matériau soumis sous un format particulier, pour transmettre une requête correspondante audit autre ordinateur;
des moyens, pour recevoir le matériau objet de la requête, dudit autre ordinateur;
et des moyens pour soumettre le matériau objet de la requête au presse-papiers sur l'ordinateur, pour faire le passage à l'application.

5. Un ordinateur selon la revendication 4, dans lequel les moyens de soumission peuvent être déconnectés de manière à ne plus soumettre la liste des formats disponibles à un presse-papiers sur l'application.

6. Un ordinateur selon la revendication 3 et la revendication 5, comprenant en outre des moyens pour assurer qu'au moins un, des moyens récepteurs et des moyens soumetteurs, est déconnecté à un moment particulier quelconque.
